# EUROPEAN PATENT APPLICATION

(11) **EP 4 657 640 A1**
(43) Date of publication of application: **03.12.2025**
(21) Application number: 24865666.2
(22) Date of filing: 24.07.2024
(51) Int. Cl.: H01M 50/383, H01M 50/358, H01M 50/204, H01M 50/249

(54) **BATTERY MODULE AND BATTERY PACK WITH REINFORCED SAFETY**

(30) Priority: 15.09.2023 KR 20230123386
(71) Applicant: LG Energy Solution, Ltd., Seoul 07335 (KR)
(72) Inventor: YUN, Hyun-Seop, Daejeon 34122 (KR); KIM, Kwang-Mo, Daejeon 34122 (KR); PARK, Min-Soo, Daejeon 34122 (KR); LEE, Jung-Hoon, Daejeon 34122 (KR); JUNG, Hye-Mi, Daejeon 34122 (KR)
(74) Representative: Plasseraud IP
(86) International application number: PCT/KR2024/010736
(87) International publication number: WO 2025/058223

(57) **Abstract**

A battery module according to the present disclosure may include a cell assembly having multiple battery cells that are mutually stacked; a module case accommodating the cell assembly in an internal space; and a cover portion that is coupled to an outer surface of the module case and has a blocking layer disposed between the module case and the cover portion to block the entry and exit of flames and reduce heat transfer, wherein the blocking layer may be foamed in a foam form and coupled to the cover portion and may be integrally formed with the cover portion.

## Description

### TECHNICAL FIELD

The present disclosure relates to a battery module and a battery pack, and more specifically, to a battery module and a battery pack capable of delaying heat transfer as much as possible by blocking the entry and exit of flames and minimizing heat transfer such as heat conduction and heat radiation when a thermal event occurs. This application is based on and claims priority from Korean Patent Application No. 10-2023-0123386, filed on September 15, 2023, with the Korean Intellectual Property Office, the disclosure of which is incorporated herein in its entirety by reference.

### BACKGROUND ART

A semi-permanent battery that converts electrical energy into chemical energy and can be repeatedly charged and discharged is called a secondary battery to distinguish it from a primary battery that cannot be reused after being used once.

Secondary batteries include lithium-ion secondary batteries, nickel cadmium (Ni-Cd) batteries, lead-acid batteries, nickel hydrogen (Ni-MH) batteries, air zinc batteries, alkaline manganese batteries, and the like. Among these, lead-acid batteries and lithium-ion secondary batteries are the most actively commercialized secondary batteries.

In particular, lithium-ion secondary batteries have advantages such as high energy storage density, light weight and miniaturization, excellent safety, low discharge rate, and long life, so they have been actively utilized as electric vehicle batteries recently. For reference, lithium-ion secondary batteries are generally classified into cylindrical, prismatic, and pouch types depending on the manufacturing form, and their applications range from electric vehicle batteries to ESS batteries and other electrical devices.

Currently, the operating voltage of a single lithium-ion secondary battery cell is about 2.5 V to 4.5 V. Therefore, in order to apply a secondary battery as an energy source for an electric vehicle, a plurality of lithium-ion battery cells are connected in series and/or in parallel to form a battery module, and the battery modules are connected in series and/or in parallel to form a battery pack.

On the other hand, since the secondary battery involves a chemical reaction during charging and discharging, its performance may be degraded when used in an environment higher than the appropriate temperature, and there is always a possibility of unexpected ignition or explosion when heat control is not performed at the appropriate temperature. Additionally, the battery module has a structure in which these secondary batteries are intensively accommodated inside the module housing, and thus, if any one of the secondary batteries becomes a trigger cell due to heat runaway, it may more easily ignite a chain reaction of secondary cells due to rapid thermal propagation of heat and flames to the surrounding secondary cells.

Accordingly, a cover portion for preventing chain ignition and heat transfer to neighboring battery modules is provided on the outer surface of the battery module, and this cover portion may usually be composed of a plurality of layers. For example, the cover portion may be provided in a layered structure in which a frame cover corresponding to the shape of the outer surface of the battery module and at least one inner skin layer are laminated within the frame cover.

This cover portion is generally made of a fire-resistant material, which may satisfy the fire resistance condition of withstanding heat, but there may be a limit to effectively blocking or delaying the transfer of flames generated when a thermal event occurs between modules, heat conduction, or heat radiation. Accordingly, there is a need to improve the structure of the cover portion so that the entry and exit of flames may be blocked and heat transfer such as heat conduction and heat radiation may be minimized.

In addition, an additional adhesive layer is interposed during the laminating process between the frame cover and the inner skin layer, and there is also a need to improve the durability problem of the cover portion, such as the inner skin layer peeling off due to flames or high heat.

Additionally, in the manufacturing process of the existing cover portion, the frame cover and the inner layer are respectively provided for each part, and separate laminating and punching processes are required, so that there are problems of increasing the tact time during the module manufacturing process and the manufacturing unit cost and decreasing productivity.

### DISCLOSURE

### Technical Problem

The present disclosure is designed to solve the problems of the related art, and therefore the present disclosure is directed to providing a battery module in which, when a thermal event occurs, the entry and exit of flames may be blocked and heat transfer such as heat conduction and heat radiation may be minimized, thereby suppressing flame propagation between modules and delaying chain heat transfer as much as possible, and additional laminating and punching processes required for each part in the manufacturing process of the existing cover portion for blocking flames may be reduced, thereby reducing the takt time during the module manufacturing process and the manufacturing unit cost.

The present disclosure is also directed to providing a battery pack including such a battery module.

Technical problems to be solved by the present disclosure are not limited to the above-described problems, and other problems not mentioned herein may be clearly understood by those skilled in the art from the following description of the present disclosure.

### Technical Solution

A battery module according to the present disclosure for solving the above problem may include a cell assembly having multiple battery cells that are mutually stacked; a module case accommodating the cell assembly in an internal space; and a cover portion that is coupled to an outer surface of the module case and has a blocking layer disposed between the module case and the cover portion to block the entry and exit of flames and reduce heat transfer, wherein the blocking layer may be foamed in a foam form and coupled to the cover portion and may be integrally formed with the cover portion.

The blocking layer may be provided on the inner wall of the cover portion on a side facing the cell assembly in the cover portion.

The blocking layer may be a foam layer that is foamed with a preset thickness and applied to the inner wall of the cover portion.

The cover portion may be provided to cover the upper surface of the module case, or to cover the upper surface of the module case and both side surfaces in the length direction of the module case.

The cover portion may include a first cover member covering the upper surface of the module case; and a pair of second cover members covering both side surfaces in the length direction of the module case.

The blocking layer may be provided on the inner wall of the first cover member, or on the inner walls of the first cover member and the second cover member.

One or more venting holes may be formed in the module case, discharge slits communicating with the venting holes may be formed in the cover portion and the blocking layer, and the discharge slits may be formed simultaneously by pressing the cover portion and the blocking layer.

An adhesive layer may be interposed between the blocking layer and the module case.

The blocking layer may include a polyurethane or silicone material.

The second cover member may be provided with at least one uneven portion formed at regular intervals.

The second cover member may be formed with a coupling sleeve that is disposed to be spaced apart by the thickness of the blocking layer and provided along the length direction of the cover portion, and to which a jig guiding the shape of the blocking layer when the blocking layer is foamed in a foam form is detachably coupled.

The cell assembly may be provided with a second blocking layer disposed between the multiple battery cells and foamed in a foam form and applied

The module case may be provided with a third blocking layer foamed in a foam form and applied to the upper surface of the cell assembly and the internal space of the module case.

Additionally, according to the present disclosure, a battery pack including the above-described battery module may be provided.

Additionally, according to the present disclosure, a vehicle including the above-described battery pack may be provided.

### Advantageous Effects

According to one aspect of the present disclosure, as the blocking layer is foamed in a foam form and coupled to the cover portion, when a thermal event occurs, the entry and exit of flames may be blocked, and heat transfer such as heat conduction and heat radiation may be minimized, thereby suppressing flame propagation between modules and delaying chain heat transfer as much as possible.

Additionally, according to one aspect of the present disclosure, as the blocking layer is integrally coupled to the cover portion, the adhesive layer between the existing cover portion and the blocking layer may be eliminated, so that the layered structure of the cover portion may be simplified, and the cover portion may be relatively robust against flames or high temperature and have increased durability.

Additionally, according to one aspect of the present disclosure, additional laminating and punching processes required for each part in the manufacturing process of the existing cover portion for blocking flames may be reduced. Accordingly, the takt time during the module manufacturing process may be reduced and the manufacturing unit cost may be reduced, thereby improving productivity.

In this way, according to the present disclosure, the entry and exit of flames from the trigger module including the trigger cell to the neighboring battery module may be blocked, and heat transfer such as heat conduction and heat radiation may be minimized, thereby delaying heat propagation between the battery modules, resulting in enhancing the safety of the battery module.

Additionally, the safety of the battery pack of the present disclosure is enhanced by including such a battery module.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic perspective view of a battery module according to an embodiment of the present disclosure.
FIG. 2 is an exploded perspective view of the major configurations of the battery module of FIG. 1.
FIG. 3 is a longitudinal cross-sectional view taken along line A-A' in the battery module of FIG. 1.
FIG. 4 is an enlarged view of part B in FIG. 3.
FIG. 5 is an exploded perspective view of a cover portion in a battery module according to an embodiment of the present disclosure.
FIG. 6 is a view showing a cover portion provided to cover the upper surface of a module case as a modified example of the cover portion of FIG. 4.
FIG. 7 is a view showing a modified example of the cover portion of FIG. 4.
FIG. 8 is a view showing a cover portion in a battery module according to a second embodiment of the present disclosure.
FIG. 9 is a view showing a cover portion in a battery module according to a third embodiment of the present disclosure.
FIG. 10 is a longitudinal cross-sectional view of a battery module according to a fourth embodiment of the present disclosure.
FIG. 11 is a view for describing a battery pack according to an embodiment of the present disclosure.
FIG. 12 is a view for describing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

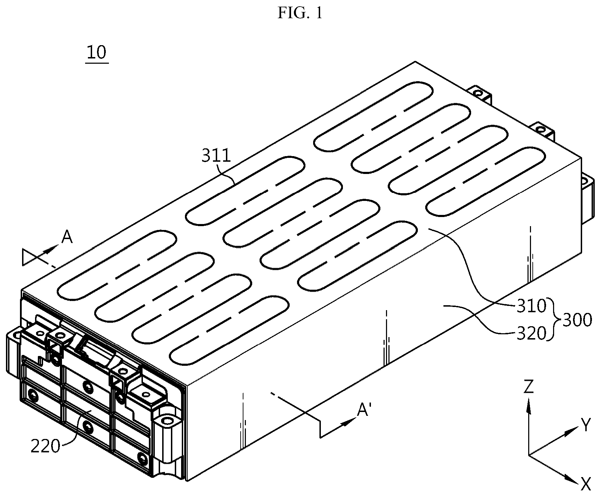

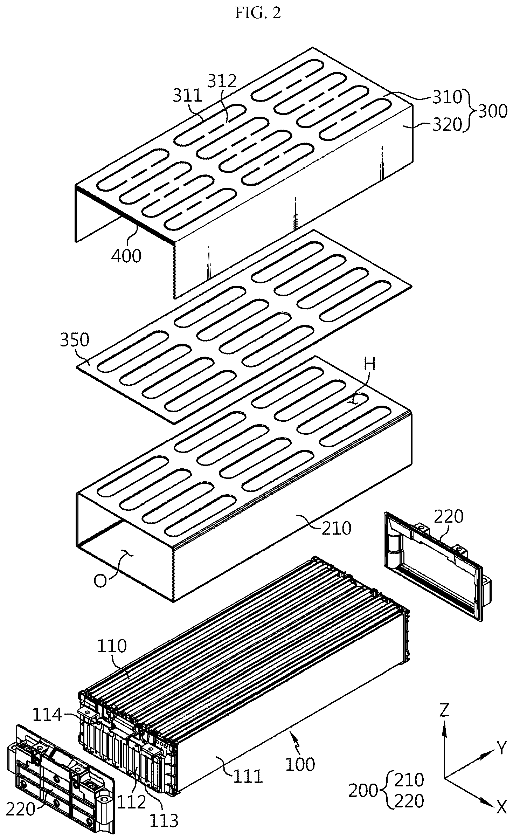

FIG. 1 is a schematic perspective view of a battery module according to an embodiment of the present disclosure, and FIG. 2 is an exploded perspective view of the major configurations of the battery module of FIG. 1.

Referring to FIGS. 1 and 2, the battery module 10 according to the present disclosure includes a cell assembly 100, a module case 200, and a cover portion 300.

The cell assembly 100 may include one or more battery cells 110. Here, each battery cell 110 may mean a secondary battery. The battery cell 110 means a secondary battery including an electrode assembly, an electrolyte, and a pouch case accommodating the electrode assembly, and in this embodiment, a pouch-type battery cell 110 having a high energy density and easy stacking is contemplated, but it is obvious that a cylindrical or prismatic secondary battery may be applied as the battery cell 110.

Referring mainly to FIG. 2, the pouch-type battery cell 110 includes an electrode assembly, a case accommodating the electrode assembly, and a pair of electrode leads 112 that are connected to the electrode assembly and are drawn out of the case to function as electrode terminals. The pair of electrode leads 112 may be drawn out forward and backward (+Y direction) along the length direction of the battery cell 110. Alternatively, if necessary, the electrode leads 112 may have a form in which they are located only at one end in the Y-axis direction, for example, at the end in the -Y-axis direction. Adjacent to the pair of electrode leads 112 of the battery cell 110, electrical components such as a busbar 113, a busbar frame 114, etc. and further a cell case 111 may be provided.

These battery cells 110 may be stacked and arranged in at least one direction. In this embodiment, referring mainly to FIG. 2, the battery cells 110 may be stacked in a form arranged along the horizontal direction (the width direction of the battery module 10, X-axis direction) while standing upright in the vertical direction (Z-axis direction), respectively.

The cell assembly 100 is an assembly of battery cells 110 formed by stacking a plurality of battery cells 110. That is, the cell assembly 100 may be an assembly of a plurality of pouch-type battery cells 110 in which the wide surface of the battery cells 110 is upright and stacked in one direction (X-axis direction), as shown in FIG. 2.

The module case 200 may be configured to have an internal space formed and accommodate the battery cells 110 in the internal space. The module case 200 is a component for protecting the cell assembly 100 from external impacts or the like and may be preferably made of a material having excellent mechanical rigidity. The module case 200 of this embodiment may include a case body 210 and end plates 220 disposed on the front and rear surfaces of the case body 210.

The case body 210 may be configured in a rectangular tubular form having an open end O at both ends in the length direction (Y-axis direction) and a hollow structure with an empty interior. For example, the case body 210 may be configured in a tubular form having an upper surface, a lower surface, a left surface, and a right surface, and having openings formed at the front and rear ends, respectively.

In addition, the module case 200 may be formed in various other forms. For example, the case body 210 may be configured in a form where a left plate, a right plate, and a bottom plate are integrated with each other. In this case, the integrated case portion may be referred to as a U-frame. The U-frame may be configured in a tubular form by welding a top plate to the upper surface. Alternatively, the module case 200 may include a boxshaped lower case in which a left plate, a right plate, a front plate, and a rear plate are integrated, and an upper cover that closes the upper open end of the lower case.

The case body 210 may be provided to allow the cell assembly 100 to be inserted therein along the length direction. That is, the case body 210 may be configured to allow the battery cells 110 stacked in multiple layers to be inserted therein in a slide or forced fit manner. For the forced fit, it may be configured such that there is almost no gap between the upper surface and lower surface of the case body 210 and the upper end and lower end of the battery cells 110, and almost no gap between both side surfaces of the case body 210 and both sides of the battery cells 110. This case body 210 may be made of a metal material having rigidity and heat resistance to physically or chemically protect the accommodated battery cells 110.

The end plates 220 are disposed at both ends in the length direction of the cell assembly 100 where the electrode leads of the battery cells 110 are located, that is, at the front and rear, and may be provided to be coupled to the open end O of the case body 210. The end plates 220 may be provided to cover the busbar frame, the electrode leads, the connection part, and the like, in a state where the electrode leads of the battery cells 110 are fixedly connected to the busbar frame, so as not to be exposed to the outside. The end plate 220 is configured, for example, to be made of an insulating material on the inside and a metal material on the outside, and may be configured to be fixedly coupled to the case body 210 by welding. Meanwhile, although not shown for convenience of the drawing, the end plate 220 may have holes or slits partially for exposing components that need to be exposed to the outside, such as a positive electrode terminal and a negative electrode terminal or a connector of the battery module 10.

The module case 200 having such a configuration may have a venting hole H formed on at least one side. When discharged substances such as a venting gas or the like are generated and discharged from the cell assembly 100 accommodated in the internal space, the venting hole H may be configured to allow the discharged substances to be discharged to the outside from the internal space of the module case 200. For example, the module case 200 may be configured in a sealed form except for the venting hole H. And, the venting hole H may be formed in a completely open form so as to penetrate the module case 200 in an inward and outward direction.

In this embodiment, the venting hole H may be provided in the form of a kind of a long hole having a predetermined width in the width direction of the module case 200 and elongated in the length direction of the module case 200. And, as indicated by H in FIG. 2, the venting hole H may be formed in plurality on the upper side of the module case 200. Meanwhile, the number and shape of the venting holes H may be various, and the position at which the venting holes H are disposed may be variously changed if necessary.

The cover portion 300 may be coupled to the outer surface of the module case 200. In this embodiment, the cover portion 300 may be provided to cover the upper surface of the module case 200 and both side surfaces in the length direction of the module case 200.

The cover portion 300 may be provided to cover the upper surface of the module case 200. Accordingly, it may be configured to cover the venting hole H formed in the upper surface of the module case 200. Additionally, the cover portion 300 may be provided on both sides in the width direction (X-axis direction) of the module case 200 (or both sides in the length direction (Y-axis direction)) to cover both side surfaces of the module case 200. Accordingly, the cover portion 300 may be coupled to the outer surface (upper surface and both side surfaces) of the module case 200.

A discharge slit 311 may be formed in this cover portion 300. The discharge slit 311 may be provided to communicate with the venting hole H.

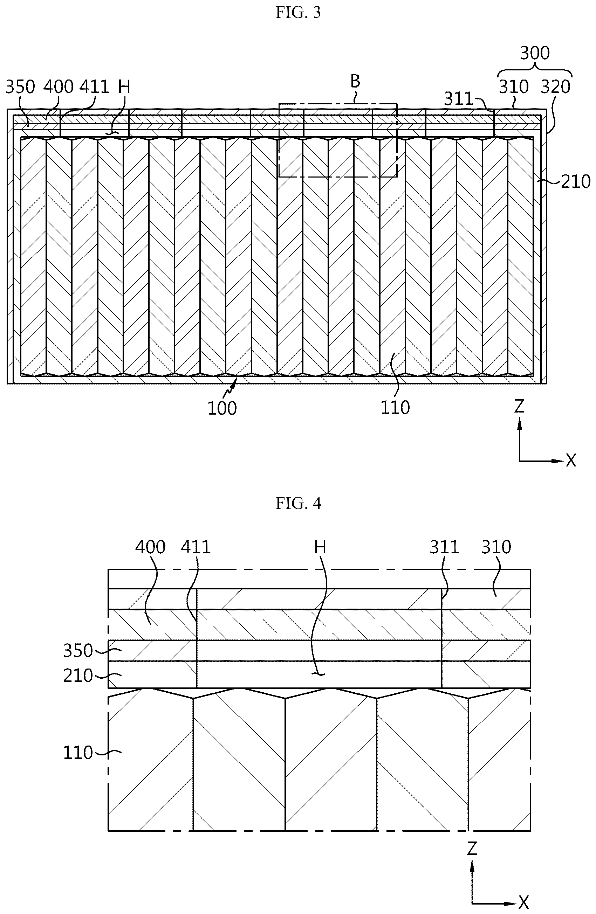

FIG. 3 is a longitudinal cross-sectional view taken along line A-A' in the battery module of FIG. 1, and FIG. 4 is an enlarged view of part B in FIG. 3.

In addition to the cover portion 300, it is necessary to effectively block, reduce, and delay flames and high heat generated by a thermal event.

Referring to FIGS. 3 and 4 and the preceding FIG. 2, the cover portion 300 in this embodiment may have a blocking layer 400.

The blocking layer 400 may be provided on the inner wall of the cover portion 300 on a side facing the cell assembly 100 in the cover portion 300. Accordingly, the blocking layer 400 may be disposed between the cover portion 300 and the module case 200.

This blocking layer 400 may be foamed in a foam form and coupled to the cover portion 300 and may be integrally formed with the cover portion 300. For example, the blocking layer 400 may be a foam layer that is foamed with a preset thickness and applied to the inner wall of the cover portion 300. The blocking layer 400 may be formed by being directly foamed on the cover portion 300, and a coupling means such as an adhesive layer laminating them between the blocking layer 400 and the cover portion 300 is not required.

However, an adhesive layer 350 may be interposed between the cover portion 300 including the blocking layer 400 and the module case 200. This adhesive layer 350 is for attaching the cover portion 300 to the module case 200.

A discharge slit 411 communicating with the venting hole H may be formed in the blocking layer 400. Accordingly, the venting gas or the like generated in the battery module 10 may be easily discharged to the outside of the battery module 10 through the discharge slit 411 of the blocking layer 400 and the discharge slit 311 of the cover portion 300.

According to this embodiment, as the blocking layer 400 is foamed and coupled to the cover portion 300, when a thermal event occurs, the entry and exit of flames may be blocked, and heat transfer such as heat conduction and heat radiation may be reduced and minimized.

Additionally, according to this embodiment, as the blocking layer 400 is foamed and coupled integrally to the cover portion 300, the adhesive layer between the layered structure of the existing cover portion 300 (between the cover portion 300 and the blocking layer (400)) may be omitted, which will be described in detail later.

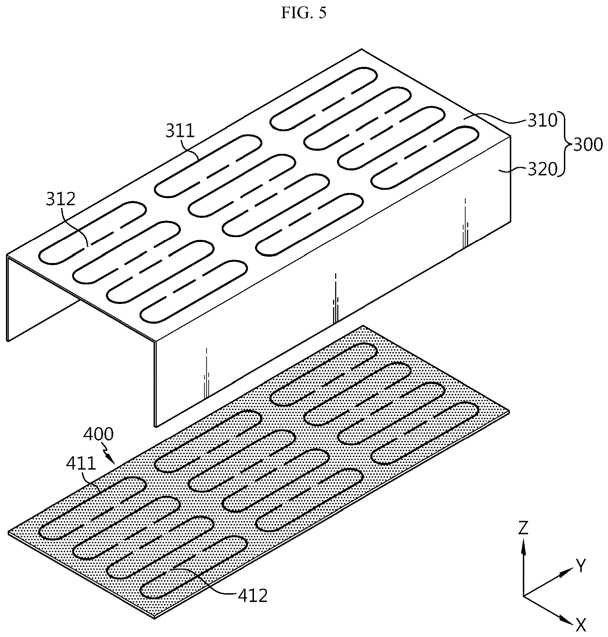

FIG. 5 is an exploded perspective view of a cover portion in a battery module according to an embodiment of the present disclosure.

Referring to FIG. 5 and FIGS. 2 to 4 again, the cover portion 300 and the blocking layer 400 will be described in detail.

The cover portion 300 is a part that is coupled to the outer surface (upper surface and both side surfaces) of the module case 200 to delay heat transfer. To this end, the cover portion 300 may include a first cover member 310 and a pair of second cover members 320.

The first cover member 310 may be a part that covers the upper surface of the module case 200. A discharge slit 311 may be formed on the plate surface of the first cover member 310. The discharge slit 311 may be provided to communicate with the venting hole H, and may be provided on the plate surface of the cover portion 300 to correspond to the shape of the venting hole H. The discharge slit 311 may be provided with one or more bridges 312.

The second cover member 320 may be a part that covers both side surfaces in the length direction of the module case 200. The second cover member 320 may be provided to be vertically bent downward on both sides in the width direction (X-axis direction) of the module case 200 (or both sides in the length direction (Y-axis direction)). Accordingly, it may be provided to cover both side surfaces of the module case 200.

The cover portion 300 as described above may be made of a material securing fire resistance or heat resistance. Preferably, the refractory layer may have a grade of V-O or higher in the UL 94 test. The refractory layer may be made of an inorganic material (e.g., a fire retardant barrier (FRB) material, etc.), a MICA material, a fire resistant plastic, or a combination thereof. Accordingly, the battery module 10 may secure heat resistance against high-temperature discharged substances such as venting gases, flames, sparks, and the like generated from an adjacent battery module when a thermal event occurs. Additionally, in the case of the battery module 10 including the trigger cell, the external leakage of discharged substances generated internally may be delayed or the heat transfer time to adjacent modules may be delayed. On the other hand, it is obvious that any material securing fire resistance or heat resistance, in addition to the materials described above, may be applied as the material of the refractory layer.

The blocking layer 400 may be provided integrally with the cover portion 300 by being foamed in a foam form and coupled to the cover portion 300 as described above, and may be a foam layer that is foamed with a preset thickness and applied to the inner wall of the cover portion 300. Referring mainly to FIG. 5, the foam layer may be coupled to the inner wall of the first cover member 310 of the cover portion 300.

This blocking layer 400 may include a polyurethane or silicone material. Due to the material of the blocking layer 400, the entry and exit of flames may be blocked, and heat transfer such as heat conduction and heat radiation may be minimized.

In addition, as the blocking layer 400 is composed of a foam layer, a fine air layer is included inside the layer due to the particle structure characteristics of the foam layer, which may cushion external impacts and alleviate and absorb external forces or impacts. Additionally, the blocking layer 400 is foamed in a foam form to form layers and occupy space, which may result in lighter weight compared to other materials.

In the blocking layer 400, a discharge slit 411 communicating with the venting hole H may be formed, like the cover portion 300. A bridge 412 may be provided in the discharge slit 411.

This discharge slit 411 may be formed simultaneously by pressing the cover portion 300 and the blocking layer 400. That is, in the manufacturing process of the existing cover portion, additional laminating and punching processes are required for each part, and accordingly, the laminating and punching processes of the cover portion 300 and the blocking layer 400 should be performed separately and individually, and there is an aspect that the complex process increases the takt time during the manufacturing process, increases the manufacturing unit cost, and inevitably decreases productivity.

According to this embodiment, since the blocking layer 400 is formed integrally with the cover portion 300 by being foamed in a foam form and coupled to the cover portion 300, a separate laminating process is not required. The adhesive layer between the layered structures of the existing cover portion may be omitted, so that the layered structure of the cover portion 300 may be simplified, and the cover portion 300 may be relatively robust against flames or high temperature and have increased durability. The phenomenon in which the adhesive layer is melted by flames or high heat and the layered structure of the cover portion 300 itself is separated and peeled off may be reduced.

Additionally, as the blocking layer 400 is formed integrally with the cover portion 300, the discharge slits 311, 411 of the cover portion 300 and the blocking layer 400 may be simultaneously processed with only one integrated punching operation without a separate pressing process for forming the discharge slits 311, 411. As a result, the takt time during the module manufacturing process may be reduced and the manufacturing unit cost may be reduced, thereby improving productivity.

According to this embodiment, the fire resistance or heat resistance of the upper surface and both side surfaces of the module case 200 may be secured through the cover portion 300. Additionally, the blocking layer 400 is foamed in a foam form and coupled to the cover portion 300, and thus, when a thermal event occurs, the entry and exit of flames may be blocked and heat transfer such as heat conduction and heat radiation may be minimized, thereby suppressing flame propagation between modules and delaying chain heat transfer as much as possible.

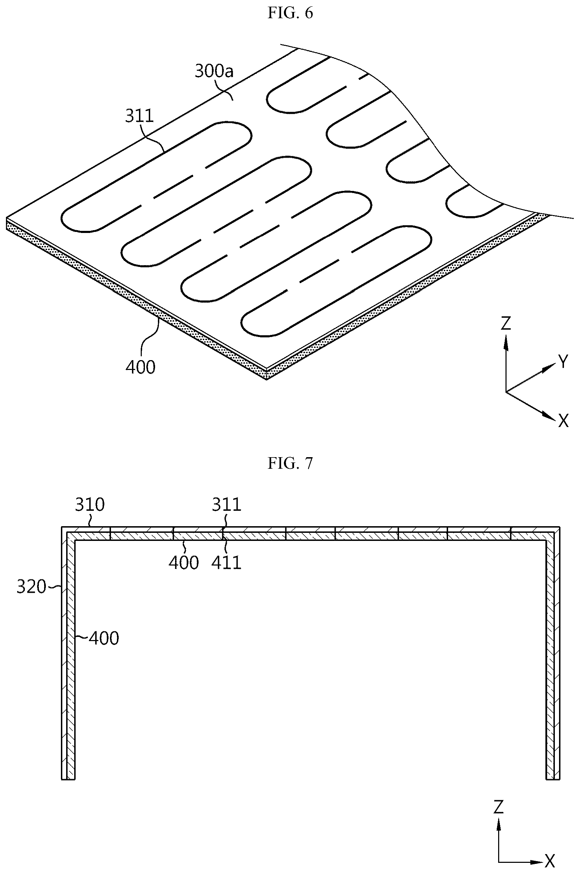

FIG. 6 is a view showing a cover portion provided to cover the upper surface of a module case as a modified example of the cover portion of FIG. 4, and FIG. 7 is a view showing a modified example of the cover portion of FIG. 4.

Referring to FIG. 6, as a modified example of the cover portion 300, the cover portion 300a may be provided to cover only the upper surface of the module case 200. The cover portion 300a may be provided as a flat plate type corresponding to the upper plate area of the module case 200. And, in this embodiment, the cover portion 300a is not provided with a second cover member 320 that covers both side surfaces of the module case 200, and the cover portion 300a may be disposed only on the upper surface of the module case 200. And, the blocking layer 400 may be provided on the lower wall of the cover portion 300a.

Referring to FIG. 7, as a modified example of the blocking layer 400, the cover portion 300 includes a first cover member 310 and a second cover member 320. And, the blocking layer 400 may be provided not only on the inner wall of the first cover member 310 but also on the inner wall of the second cover member 320. That is, the blocking layer 400 may be coupled to the inner wall of the cover portion 300 composed of both the inner wall of the first cover member 310 covering the upper surface of the module case 200 and the inner wall of a pair of second cover members 320 covering both side surfaces in the length direction of the module case 200. According to this modified example, the flame blocking performance and heat transfer efficiency may be relatively higher than those of the previous embodiments.

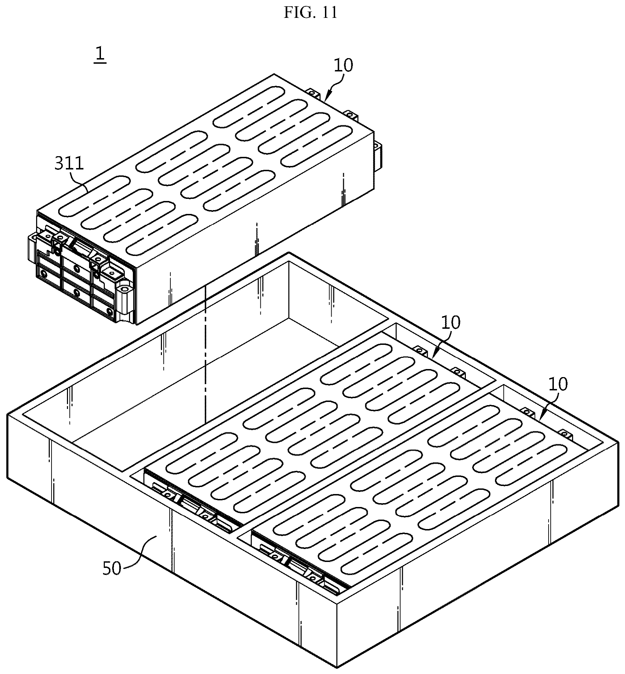

In these modified examples, any one embodiment may be applicable if necessary when the sizes of the battery module 10 and the battery pack 1 (see FIG. 11) are changed.

In this way, the blocking layer 400 is foamed in a foam form and coupled to the cover portions 300, 300a, and thus, when a thermal event occurs, the entry and exit of flames may be blocked and heat transfer such as heat conduction and heat radiation may be minimized, thereby suppressing flame propagation between modules and delaying chain heat transfer as much as possible.

Additionally, according to this embodiment, as the blocking layer 400 is foamed and coupled integrally to the cover portion 300a, the adhesive layer between the layered structure of the existing cover portion 300 may be omitted, so that the layered structure of the cover portion 300a may be simplified, and the cover portion 300a may be relatively robust against flames or high temperature and have increased durability.

Additionally, additional laminating and punching processes required for each part in the manufacturing process of the existing cover portion for blocking flames may be reduced. Accordingly, the takt time during the module manufacturing process may be reduced and the manufacturing unit cost may be reduced, thereby improving productivity.

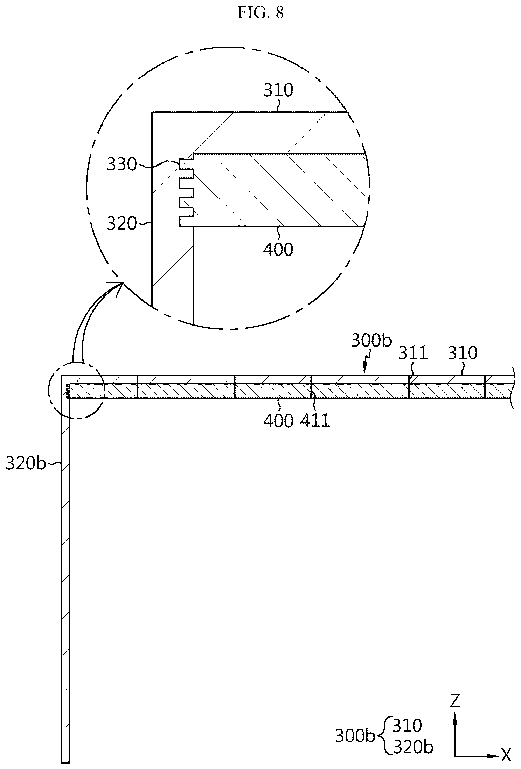

Next, other embodiments of the battery module 10 of the present disclosure will be briefly described with reference to FIGS. 8 to 10.

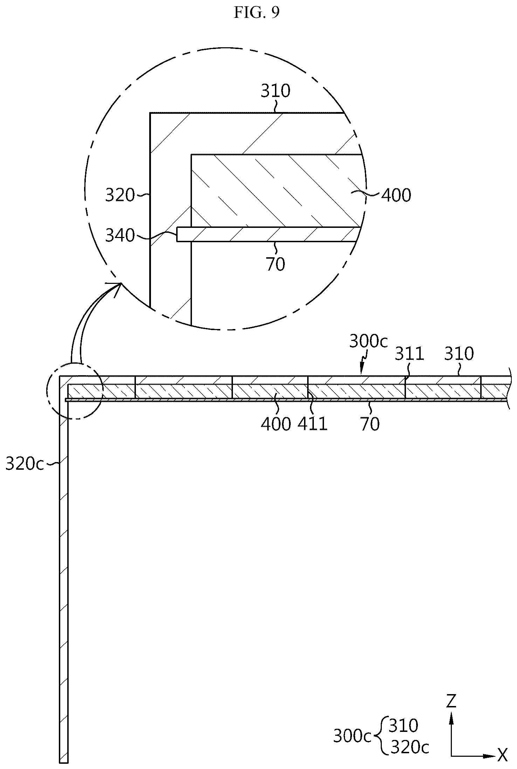

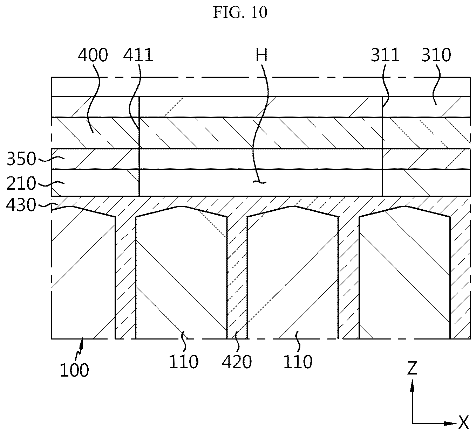

FIG. 8 is a view showing a cover portion in a battery module according to a second embodiment of the present disclosure, FIG. 9 is a view showing a cover portion in a battery module according to a third embodiment of the present disclosure, and FIG. 10 is a longitudinal cross-sectional view of a battery module according to a fourth embodiment of the present disclosure.

The same reference numerals as in the previous drawings refer to the same members, and duplicate descriptions of the same members will be omitted, and differences from the above-described embodiment will be mainly described.

Referring to FIG. 8, the cover portion 300b includes a first cover member 310 covering the upper surface of the module case 200 and a pair of second cover members 320b covering both side surfaces in the length direction of the module case 200, and the blocking layer 400 may be provided on the inner wall of the first cover member 310. And, the second cover member 320b may be provided with at least one uneven portion 330 formed at regular intervals.

The uneven portion 330 may be provided in the region where the blocking layer 400 faces the second cover member 320b, and may be formed by being recessed at regular intervals in the thickness direction of the second cover member 320b.

According to this embodiment, the coupling force of the blocking layer 400 to the cover portion 300b may be further improved. That is, the blocking layer 400 is integrally coupled to the cover portion 300b in a foam form, and the edge of the blocking layer 400 is filled and hardened to correspond to the shape of the uneven portion 330, so that the blocking layer 400 may be more firmly coupled to the cover portion 300b. The blocking layer 400 may be more integrally coupled to the cover portion 300b. Accordingly, even if exposed to flames or high temperature when a thermal event occurs, the peeling phenomenon of the blocking layer 400 from the cover portion 300b may be minimized. The layered structure of the cover portion 300b including the blocking layer 400 may be relatively more robust against flames or high temperature and have increased durability.

Referring to FIG. 9, the cover portion 300c of the battery module 10 according to a third embodiment includes a first cover member 310 covering the upper surface of the module case 200 and a pair of second cover members 320c covering both side surfaces in the length direction of the module case 200, and the blocking layer 400 may be provided on the inner wall of the first cover member 310. And, a coupling sleeve 340 to which a jig 70 is detachably coupled may be formed on the second cover member 320c.

Specifically, the blocking layer 400 may be a foam layer applied to the inner wall of the cover portion 300c, and it is necessary to control the foam layer in order to form it with a preset thickness. Accordingly, a separate guide or jig 70 configuration for controlling the thickness of the foam layer may be required. Accordingly, the second cover member 320c may be formed with a coupling sleeve 340 disposed to be spaced apart by the thickness of the blocking layer 400 and provided along the length direction of the cover portion 300c. After the jig 70 is coupled to the coupling sleeve 340 formed along the length direction of the cover portion, the blocking layer 400 may be foamed in a foam form in the gap formed by the jig 70 and the first cover member 310. In this case, the shape of the blocking layer 400 may be guided, and the blocking layer 400 with a preset thickness may be easily formed. After the blocking layer 400 is coupled, the jig 70 may be removed.

Referring to FIG. 10, in the battery module 10 according to a fourth embodiment, the cell assembly 100 may be provided with a second blocking layer 420 disposed between the plurality of battery cells 110 and foamed in a foam form and applied.

And, the module case 200 may be provided with a third blocking layer 430 foamed in a foam form and applied to the upper surface of the cell assembly 100 and the internal space of the module case 200. Accordingly, as the foam layer made of a polyurethane or silicone material covers each battery cell 110 inside the battery module, the entry and exit of flames may be blocked and heat transfer such as heat conduction and heat radiation may be minimized, so that when a thermal event occurs, flame propagation efficiency between modules may be improved and chain heat transfer may be delayed as much as possible.

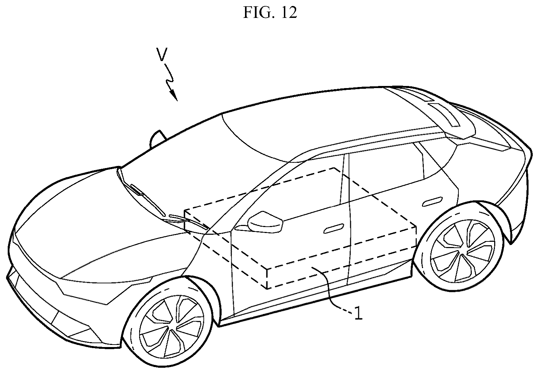

FIG. 11 is a view for describing a battery pack according to an embodiment of the present disclosure, and FIG. 12 is a view for describing a vehicle according to an embodiment of the present disclosure.

Referring to FIG. 11, the battery pack 1 according to the present disclosure may include one or more battery modules 10 according to the present disclosure described above. In particular, in order to increase capacity and/or output power, the battery pack 1 according to the present disclosure may include multiple battery modules 10 according to the present disclosure. In this case, various configurations described above may be applied to each battery module 10. For example, each battery module 10 may include a cell assembly 100, a module case 200, and a cover portion 300, and the cover portion 300 may include a blocking layer 400. The blocking layer 400 may be made of a foam layer made of a polyurethane or silicone material to easily block flames and heat transfer. And, these multiple battery modules 10 may be accommodated inside a pack case 50. Moreover, in the case of the battery module 10 according to an embodiment of the present disclosure, even if another battery module 10 is located on the front or rear side, heat transfer between modules may be effectively prevented.

The battery pack 1 according to the present disclosure may further include various other components, in addition to the battery module 10 or the pack case, for example, components of a battery pack known at the time of application of the present disclosure, such as a battery management system (BMS), a busbar, a relay, a current sensor, a fuse, or the like, in the internal space of the pack case.

Referring to FIG. 12, the battery module 10 according to the present disclosure or the battery pack 1 according to the present disclosure may be applied to a vehicle V such as an electric vehicle or a hybrid vehicle. That is, the vehicle V according to the present disclosure may include the battery module 10 according to the present disclosure or the battery pack 1 according to the present disclosure. Additionally, the vehicle V according to the present disclosure may further include various other components included in the vehicle V, in addition to the battery module 10 or the battery pack 1. For example, the vehicle V according to the present disclosure may further include a vehicle body, a motor, a control device such as an electronic control unit (ECU), or the like, in addition to the battery module 10 according to the present disclosure.

Additionally, the battery module 10 according to the present disclosure or the battery pack 1 according to the present disclosure may be applied to an energy storage system ESS. That is, the energy storage system according to the present disclosure may include the battery module 10 according to the present disclosure or the battery pack 1 according to the present disclosure.

The present disclosure has been hereinabove described with regard to a limited number of embodiments and drawings, but the present disclosure is not limited thereto and various modifications and variations will be possible by those having ordinary skill in the technical field pertaining to the present disclosure within the technical aspect of the present disclosure and the scope of the appended claims and their equivalents.

Meanwhile, the terms indicating directions as used herein such as upper, lower, left, right, front, and rear are used for convenience of description only, and it is obvious to those skilled in the art that the terms may change depending on the position of the stated element or an observer.

**[Explanation of Reference Signs]**

| | | | |
|---|---|---|---|
| 1: | battery pack | V: | vehicle |
| 10: | battery module | 100: | cell assembly |
| 110: | battery cell | 200: | module case |
| 210: | case body | H: | venting hole |
| 220: | end plate | 300, 300a, 300b, 300c: | cover portion |
| 310: | first cover member | 311: | discharge slit |
| 320, 320b, 320c: | second cover member | 330: | uneven portion |
| 340: | coupling sleeve | 350: | adhesive layer |
| 400: | blocking layer | | |

## Claims

1. A battery module, comprising:
a cell assembly having multiple battery cells that are mutually stacked;
a module case accommodating the cell assembly in an internal space; and
a cover portion that is coupled to an outer surface of the module case and has a blocking layer disposed between the module case and the cover portion to block the entry and exit of flames and reduce heat transfer,
wherein the blocking layer is foamed in a foam form and coupled to the cover portion and is integrally formed with the cover portion.

2. The battery module according to claim 1,
wherein the blocking layer is provided on the inner wall of the cover portion on a side facing the cell assembly in the cover portion.

3. The battery module according to claim 2,
wherein the blocking layer is a foam layer that is foamed with a preset thickness and applied to the inner wall of the cover portion.

4. The battery module according to claim 2,
wherein the cover portion is provided to cover the upper surface of the module case, or to cover the upper surface of the module case and both side surfaces in the length direction of the module case.

5. The battery module according to claim 4,
wherein the cover portion comprises:
a first cover member covering the upper surface of the module case; and
a pair of second cover members covering both side surfaces in the length direction of the module case.

6. The battery module according to claim 5,
wherein the blocking layer is provided on the inner wall of the first cover member, or on the inner walls of the first cover member and the second cover member.

7. The battery module according to claim 3,
wherein one or more venting holes are formed in the module case,
discharge slits communicating with the venting holes are formed in the cover portion and the blocking layer, and
the discharge slits are formed simultaneously by pressing the cover portion and the blocking layer.

8. The battery module according to claim 3,
wherein an adhesive layer is interposed between the blocking layer and the module case.

9. The battery module according to claim 3,
wherein the blocking layer comprises a polyurethane or silicone material.

10. The battery module according to claim 5,
wherein the second cover member is provided with at least one uneven portion formed at regular intervals.

11. The battery module according to claim 5,
wherein the second cover member is formed with a coupling sleeve that is disposed to be spaced apart by the thickness of the blocking layer and provided along the length direction of the cover portion, and to which a jig guiding the shape of the blocking layer when the blocking layer is foamed in a foam form is detachably coupled.

12. The battery module according to claim 3,
wherein the cell assembly is provided with a second blocking layer disposed between the multiple battery cells and foamed in a foam form and applied.

13. The battery module according to claim 12,
wherein the module case is provided with a third blocking layer foamed in a foam form and applied to the upper surface of the cell assembly and the internal space of the module case.

14. A battery pack comprising a battery module according to any one of claims 1 to 13.

15. A vehicle comprising a battery pack according to claim 14.
